# EUROPÄISCHE PATENTSCHRIFT

(11) **EP 0 750 655 B1**
(45) Veröffentlichungstag und Bekanntmachung des Hinweises auf die Patenterteilung: **03.06.1998**
(21) Anmeldenummer: 95912227.6
(22) Anmeldetag: 09.03.1995
(51) Int. Cl.: C09F 1/04, C09J 193/00

(54) **MODIFIZIERTE HARZE**
MODIFIED RESINS
RESINES MODIFIEES

(30) Priorität: 18.03.1994 DE 4409240
(43) Veröffentlichungstag der Anmeldung: 02.01.1997
(73) Patentinhaber: Henkel Kommanditgesellschaft auf Aktien, 40191 Düsseldorf (DE)
(72) Erfinder: EICKEN, Ulrich, D-41352 Korschenbroich (DE); GORZINSKI, Manfred, D-40227 Düsseldorf (DE); BIRNBRICH, Paul, D-42719 Solingen (DE); TAMCKE, Thomas, D-40599 Düsseldorf (DE)
(86) Internationale Anmeldenummer: EP9500862
(87) Internationale Veröffentlichungsnummer: WO9525773

(56) Entgegenhaltungen:
- EP-A- 0 537 682
- US-A- 3 632 855
- DATABASE WPI Derwent Publications Ltd., London, GB; AN 84-060139[10] & JP,A,59 018 774 (HITACHI CHEMICAL KK) 31. Januar 1984
- DATABASE WPI Derwent Publications Ltd., London, GB; AN 94-148122[18] & JP,A,6 093 240 (ARAKAWA CHEM. IND. LTD.) 5. April 1994
- DATABASE WPI Derwent Publications Ltd., London, GB; AN 92-247255[30] & JP,A,4 168 103 (TAKEDA IND. LTD.) 16. Juni 1992
- DATABASE WPI Derwent Publications Ltd., London, GB; AN 84-123516[20] & JP,A,59 059 761 (HARIMA KASEI KOGYO ET AL) 5. April 1984

## Beschreibung

Die Erfindung beschreibt Harze auf Basis epoxidmodifizierter Harzsäuren, ein Verfahren zu ihrer Herstellung und ihre Anwendung in Klebstoffen.

Einer Vielzahl von Klebstoffen auf Basis von Polymeren werden zur Modifizierung und Verbesserung der Klebstoffeigenschaften sogenannte Tackifierharze zugesetzt. Sie sollen die Klebrigkeit oder die Haftung der Klebstoffe erhöhen. Durch die Formulierung der Mischung von Polymer und Tackifierharz werden letztendlich die Klebstoff-Eigenschaften eingestellt.

Die im Handel befindlichen Harze lassen sich in zwei Hauptgruppen einteilen: die auf natürlichen Harzsäuren basierenden und die Kohlenwassserstoffharze.

Die Harzsäuren können in reiner Form oder nach Modifizierung über z.B. Disproportionierung, Addition von Maleinsäureanhydrid oder Veresterung mit polyfunktionellen Alkoholen wie Glycerin, Trimethylolpropan oder Pentaerythrit verwendet werden.

Die reinen Harzsäuren haben eine Reihe von Nachteilen, z.B. ist ihre Stabilität gegen Autoxidation unzureichend. Weiterhin neigen sie dazu, nach längerer Lagerung im gelösten Zustand auszukristallisieren. Aus Tallöl hergestellte Harzsäuren haben wegen des Schwefelgehalts der Rohprodukte einen unangenehmen Geruch.

Das Phänomen der Harzkristallisation wird eingehend in der Monographie von W.Sandermann, Naturharze, Terpentinöl, Tallöl, Chemie und Technologie, S. 175 - 185, Springer, Berlin, 1960 abgehandelt. Dort werden auch Verfahren beschrieben, die zu einer Verminderung der Kristallisationsneigung führen, z.B. ein thermisches Verfahren, bei dem die Harze auf Temperaturen von über 200 bis 300 °C erhitzt werden. Die dabei eintretende Isomerisierung führt zu einer Verringerung der Kristallisationsneigung. Als weitere Verfahren werden die Disproportionierung der Harze mit Hilfe von elementarem Jod oder Schwefel und die Addition von Formaldehyd erwähnt.

In der EP-A2 0 520 541 wird ein Verfahren beschrieben, bei dem Harzsäuren in Gegenwart von Phosphorsäure erhitzt und anschließend durch Zugabe von Jod disproportioniert werden. Durch dieses Verfahren wird der Erweichungspunkt der Harzsäuren und ihre Kristallisationstendenz herabgesetzt.

Zur Verminderung des Geruchs von Tallharzen können übliche Desodorierungsverfahren, wie Dämpfen, Durchleiten von Stickstoff durch die Schmelze und Destillation verwendet werden.

Die nach dem Stand der Technik durchgeführten Verfahren haben verschiedene Nachteile. Eine thermische Behandlung allein vermag die Kristallisationstendenz der Harze nicht ausreichend zu verringern. Die Disproportionierung mit Hilfe von Jod, ggf. in Kombonation mit Phosphorsäure ist sehr viel wirksamer, aber durch Addition von Jod an noch vorhandene Doppelbindungen entstehen halogenierte Kohlenwasserstoffe, die wegen ihres toxikologischen Potentials unerwünscht sind.

Die Desodorierung von Tallharz mit den üblichen Methoden verläuft unbefriedigend, vermutlich weil ein Teil der verantwortlichen Schwefelverbindungen schwerflüchtig ist.

Die Umsetzung von Harzsäuren mit Glycidylethern ist ebenfalls bekannt, z.B. aus R.N. Wheeler, Paint Technology 19, 159 (1955) oder L. Korfhage, Deutsche Farbenzeitschrift, 9, 463 (1955). In diesen Druckschriften wird die Umsetzung von Diglycidylethern des Bisphenol A oder seiner Selbstkondensationsprodukte mit Harzsäuren oder Fettsäuren beschrieben. Die Verbindungen werden als Rohstoffe für Lacke verwendet.

Die Umsetzung von Harzsäuren mit epoxidierten Fettstoffen ist ebenfalls bekannt (siehe US 3 632 855). Unter Fettstoffen werden hier lineare α-Olefine verstanden. Diese Harze sollen als Tackifier für Gummi verwendet werden.

Wäßrige Dispersionsklebstoffe für die unterschiedlichsten Einsatzgebiete z.B. als Haftklebstoffe, Kontaktklebstoffe oder Fußbodenklebstoffe sind ebenfalls seit langem bekannt. Sie bestehen im wesentlichen aus einer Polymerdispersion, der zur Modifizierung oder Einstellung der Klebeeigenschaften Tackifierharze zugegeben werden können.
Da die bekannten Tackifierharze nicht in fester Form in die Dispersion gegeben werden können, werden sie in Form einer Lösung, ggf. bei höheren Temperaturen zugefügt. Ein besonders gut geeignetes Lösungsmittel für diesen Zweck ist Toluol, da es schon bei sehr geringen Zusatzmengen in der Lage ist, das Auskristallisieren der Harze zu verhindern. Aus toxikologischen und arbeitshygienischen Gründen wird der Einsatz von aromatischen Lösungsmitteln jedoch mehr und mehr eingeschränkt. Durch die zum Beispiel in der noch nicht veröffentlichten deutschen Patentanmeldung Aktenzeichen P 42 33 734.8 beschriebene Reduktion und Substitution der aromatischen Lösungsmittel durch beispielsweise aliphatische Lösungsmittel tritt das Problem der Harzkristallisation zunehmend in den Vordergrund, da diese Lösungsmittel ein weniger gutes Lösungsvermögen für Harze besitzen. Das Auskristallisieren des Harzes im Klebstoff, beispielweise nach längerer Lagerung bei niedrigen Temperaturen von 5 bis 15 °C, macht den Klebstoff unbrauchbar. Dementsprechend besteht ein dringender Bedarf nach Harzen mit verringerter Kristallisationstendenz, insbesondere für Dispersionsklebstoffe.

Aufgabe der Erfindung ist gewesen, Tackifierharze zu entwikkeln, die die beschriebenen Nachteile nicht aufweisen. Hierzu wird erfindungsgemäß vorgeschlagen, Harzsäuren durch eine chemische Reaktion so zu modifizieren, daß ihre Kristallisationsneigung und/oder die von ihnen ausgehende Geruchsbelästigung vermindert werden. Gleichzeitig sollen die so modifizierten Harzsäuren sich leicht in Klebstoffe einarbeiten lassen und als Tackifierharze eine Verbesserung der Klebeeigenschaften bewirken. Eine wichtige Bedingung ist dabei, daß von den modifizierten Harzsäuren keine toxikologische Gefährdung ausgehen darf.
Eine weitere Aufgabe der Erfindung ist, Dispersionsklebstoffe zur Verfügung zu stellen, die eine hohe Klebkraft aufweisen und lagerstabil sind und einen milden Geruch besitzen.

Gegenstand der Erfindung ist ein Harz, erhältlich durch Reaktion von Epoxidverbindungen mit Harzsäuren, indem man
a) epoxidierte Ester von ungesättigten Fettsäuren mit aliphatischen Alkoholen mit Harzsäuren bei erhöhten Temperaturen reagieren läßt,
b) gewünschtenfalls vor oder nach dieser Reaktion die Harzsäuren einer thermischen Behandlung unterzieht,
c) gewünschtenfalls im Anschluß an die Epoxid-Addition mit cyclischen Dicarbonsäureanhydriden und/oder olefinische Doppelbindungen enthaltenden Dicarbonsäuren reagieren läßt,
d) gewünschtenfalls im Anschluß an die Epoxid-Addition eine Veresterung überschüssiger Carboxylgruppen mit den durch die Addition von Epoxid- an Carboxylgruppen entstandenen OH-Gruppen durchführt.
Das Harz hat eine verringerte Kristallisationstendenz.

Ein weiterer Gegenstand der Erfindung ist ein Verfahren zur Herstellung von Harzen mit verringerter Kristallisationstendenz, bei dem Harzsäuren für 2 bis 6 Stunden auf Temperaturen von 200 bis 300 °C erhitzt werden, anschließend bei Temperaturen von 100 bis 150 °C epoxidierte Ester von ungesättigten Fettsäuren mit aliphatischen Alkoholen zugegeben werden, wobei das Äquivalentverhältnis von Epoxidgruppen zu Carboxylgruppen im Bereich von 0,95:1 bis 0,01:1 liegt, und schließlich für 2 bis 4 Stunden bei Temperaturen von 200 bis 250 °C gegebenenfalls unter weiterer Zugabe eines Veresterungskatalysators überschüssige Carboxylgruppen mit entstandenen Hydoxylgruppen verestert werden.

Ein weiterer Gegenstand der Erfindung sind Dispersionsklebstoffe auf Basis von Vinylpolymeren, die erfindungsgemäße Harze oder Harze, die nach dem erfindungsgemäßen Verfahren hergestellt wurden, als Tackifierharz enthalten, wobei das Gewichtsverhältnis von Vinylpolymerem:Harz im Klebstoff im allgemeinen zwischen 20:1 bis 0,3:1, vorzugsweise zwischen 3:1 bis 0,5 :1 liegt.

Natürliche Harzsäuren werden aus Holz gewonnen, und zwar entweder als noch flüchtige Terpene enthaltendes Balsamharz durch Harzung des lebenden Baums, indem dessen Rinde angeschnitten und das Harz aufgefangen wird oder als Baumharz durch Lösungsmittel-Extraktion des Harzes aus gealterten Holzstubben oder aus dem Tallöl, das beim Sulfat-Prozeß zur Cellulose-Gewinnung anfällt.

Die natürlichen Harzsäuren enthalten zu etwa 90 Gew.% Carboxylgruppen tragende Verbindungen, der Rest von etwa 10 Gew.% besteht aus neutralen, unverseifbaren Verbindungen wie z.B. Kohlenwasserstoffen oder Alkoholen.

Die Harzsäuren sind polycyclische, vielfach Doppelbindungen enthaltende Carbonsäuren mit 20 C-Atomen. Beispiele für Harzsäuren sind die Lävopimarsäure, Neoabietinsäure, Palustrinsäure, Abietinsäure, Dehydroabietinsäure, Tetrahydroabietinsäure, Pimarsäure und Isopimarsäure.

Das beim Sulfatprozeß anfallende Tallöl besteht im wesentlichen aus Fettsäuren, Harzsäuren und Unverseifbaren. Die Isolierung der Harzsäuren kann durch Destillation erfolgen.

Bei den epoxidierten Estern von ungesättigten Fettsäuren mit aliphatischen Alkoholen befinden sich die epoxidierten olefinischen Doppelbindungen im Fettsäureteil dieser Fettsäureester. Die ungesättigten Fettsäuren enthalten im allgemeinen 10 bis 24 C-Atome und 1 bis 5 olefinische Doppelbindungen. Beispiele für ungesättigte Fettsäuren sind Ölsäure, Elaidinsäure, Linolsäure, Linolensäure, Myristoleinsäure, Palmitoleinsäure, Gadoleinsäure, Erucasäure, Ricinolsäure und Arachidonsäure.
Die aliphatischen Alkohole können monofunktionelle, lineare oder verzweigte Alkohole mit 1 bis 18 C-Atomen darstellen, z.B. Methanol, Ethanol, 1-Propanol, 2-Propanol, 1-Butanol, 2-Butanol, 1-Hexanol, 2-Ethylhexanol, 1-Octanol und 1-Dodecanol. Auch polyfunktionelle Alkohole, wie z.B. Ethandiol, Propandiol, Glycerin, Trimethylolpropan, Pentaerythrit und Polyglycerin können mit ungesättigten Fettsäuren verestert sein und stellen Fettstoffe im Sinne der Erfindung dar.

Besonders bevorzugt werden epoxidierte Ester von ungesättigten Fettsäuren mit aliphatischen Alkoholen eingesetzt, die sich von Triglyceriden oder Methylestern ungesättigter Fettsäuren ableiten.

Als Beispiele seien epoxidiertes Sojaöl, epoxidiertes Leinöl, epoxidertes Rüböl und Epoxystearinsäuremethylester genannt.

Die Modifikation der Harzsäuren erfolgt durch Reaktion ihrer Carboxylgruppen mit der Epoxidgruppe. Die Reaktion kann zweckmäßigerwiese bei erhöhter Temperatur in üblichen Reaktionsgefäßen durchgeführt werden. Es kann günstig sein, die Reaktion in Gegenwart eines an sich bekannten Katalysators, wie eines tertiären Amins, z.B. Dimethylbenzylamin, Triethylamin, Dimethylaminopyridin oder Dimethyloctadecylamin, eines quaternären Ammoniumsalzes, wie Trimethylbenzylammoniumhydroxid oder einer Lithium-Verbindung wie Lithiumhydroxid, Lithiumcarbonat oder einer Li-Seife durchzuführen. Die gennannten Katalysatoren können in Mengen von 0,001 bis 1 Gew.% - bezogen auf den Gesamtansatz - zugegeben werden.

Es kann zweckmäßig sein, vor oder nach der Modifikation mit der Epoxidverbindung eine thermische Behandlung der Harzsäure vorzunehmen, indem die Harzsäure für einen Zeitraum von etwa 2 bis 6 Stunden auf Temperaturen von etwa 200 bis 300 °C erhitzt wird.

Bevorzugt wird das erfindungsgemäße Verfahren zur Herstellung der modifizierten Harzsäuren so durchgeführt, daß die Harzsäuren zunächst in einem Reaktionsgefäß unter Inertgas aufgeschmolzen werden. Unter Rühren werden sie anschließend für etwa 2 bis 6 Stunden auf eine Temperatur von etwa 200 bis 300 °C erhitzt. Danach wird die Epoxidverbindung zugefügt, vorzugsweise nach Abkühlen der Schmelze auf etwa 150 °C. Falls gewünscht, kann auch der Katalysator zugefügt werden. Bei der Temperatur von etwa 150 bis 250 °C wird noch für etwa 2 bis 4 Stunden nachgerührt.
In einer besonders bevorzugten Ausführungsform der Erfindung findet dabei eine Veresterungsreaktion der durch die Addition der Carboxylgruppe an den Epoxidring entstandenen
Hydroxylgruppe mit im Reaktionsgemisch noch vorhandenen Carboxylgruppen unter Abspaltung von Wasser statt. Falls gewünscht kann zur Beschleunigung der Veresterungsreaktion ein an sich üblicher Veresterungskatalysator, bevorzugt auf Basis von Zinn-Verbindungen, in üblichen Mengen von 0,001 bis 0,1 Gew.% -bezogen auf Ansatz - zugefügt werden.

Das erfindungsgemäße Verfahren kann auch so durchgeführt werden, daß erst die Epoxidverbindung sowie gewünschtenfalls der Katalysator zugegeben und danach für 2 bis 6 Stunden auf Temperaturen von etwa 200 bis 300 °C erhitzt wird.

Das Äquivalentverhältnis von Epoxid(Epo)- zu Carboxylgruppen Epo:COOH kann zwischen 1,5:1 und 0,01:1, bevorzugt zwischen 0,95:1 und 0,05:1 liegen.

Für bestimmte Anwendungszwecke, insbesondere zur Verwendung der erfindungsgemäßen modifizierten Harzsäuren als Tackifierharze für Fußbodenklebstoffe in Form wäßriger Dispersionen, kann es nützlich sein, im Anschluß an die Epoxidmodifizierung noch eine Nachreaktion mit einem cyclischen Carbonsäureanhydrid oder einer olefinische Doppelbindungen enthaltenden Dicarbonsäure durchzuführen.

Als cyclische Dicarbonsäureanhydride können beispielsweise Bernsteinsäure-, Phthalsäure-, Tetrahydrophthalsäure-, Hexahydrophthalsäure- und Trimellitsäureanhydrid eingesetzt werden. Bevorzugt ist die Verwendung von Maleinsäureanhydrid.

Als olefinische Doppelbindungen enthaltende Dicarbonsäuren können z.B. Fumarsäure, Maleinsäure oder Itaconsäure eingesetzt werden.

Die Nachreaktion erfolgt so, daß die modifizierte Harzsäure mit dem Anhydrid oder der ungesättigten Dicarbonsäure versetzt und für etwa 1 bis 3 Stunden bei Temperaturen von etwa 100 bis 150 °C nachgerührt wird. Unter diesen Bedingungen kann eine Addition des Anhydridringes an die aus der Reaktion der Epoxidgruppen mit den Carboxylgruppen entstandenen Hy-droxylgruppen erfolgen. Wenn olefinische Doppelbindungen enthaltende Anhydride verwendet werden, kann es auch zu Diels-Alder Reaktionen mit Dien-Gruppen aus den Harzsäuren kommen.
Die Nachreaktion mit Malein- oder Fumarsäure erfordert im allgemeinen eine höhere Temperaur von etwa 200 bis 250 °C.

Die cyclischen Anhydride oder olefinische Doppelbindungen enthaltenden Dicarbonsäuren werden im allgemeinen in Mengen von 1 bis 40 Gew.%, bevorzugt 5 bis 20 Gew.% - bezogen auf modifizierte Harzsäure - zugesetzt.

Die nach dem erfindungsgemäßen Verfahren modifizierten Harzsäuren zeigen eine verminderte Kristallisationstendenz. Wenn aus Tallöl stammende Harzsäuren nach dem Verfahren modifiziert werden, wird darüber hinaus der diesen Verbindungen anhaftende stechende Geruch stark reduziert.

Mit Hilfe der erfindungsgemäßen Tackifierharze lassen sich Dispersionsklebstoffe herstellen, die im wesentlichen aus einem Vinyl-Polymeren, einem Tackifierharz, einem Lösungsmittel und Wasser bestehen.

Die Polymere dieser Klebstoffe bestehen aus Vinylmonomeren, z.B. Acrylsäureestern, Styrol-Acrylat-Copolymeren, Acrylat-Vinylacetat-Copolymeren, Ethylen-Vinylacetat-Copolymeren, Acrylat-Acrylnitril-Copolymeren oder Ethylen-Vinylacetat-Acrylat-Copolymeren.

Diese Polymeren werden in emulgierter Form über an sich bekannte Methoden der Emulsionspolymerisation hergestellt.

Die Tackifierharze basieren im allgemeinen auf natürlichen Harzsäuren.

Das Gewichtsverhältnis von Vinylpolymerem : Tackifierharz im Klebstoff richtet sich nach dem Verwendungszweck. Es liegt im allgemeinen zwischen 20:1 bis 0,3:1, vorzugsweise zwischen 3:1 bis 0,5 :1.

Als Lösungsmittel kommen vor allem Kohlenwasserstoffe, insbesondere Isoparaffine, Glykolether aliphatischer oder aromatischer Alkohole und deren Ester, wie z.B. Butyldiglykol, Butylglykol, Methoxypropanol, Butylglykolacetat, Butyldiglykolacetat und Methoxypropylacetat, und Ester, wie z.B. Butylacetat, in Frage.

Je nach Verwendungszweck kann der Klebstoff noch weitere Zusatzstoffe wie Wachse, Füllstoffe, Stabilisatoren, Pigmente,

Pigmentdispergatoren, Weichmacher, Entschäumer, Viskositätsregler und Konservierungsmittel enthalten.

Ein Dispersionsklebstoff enthält im allgemeinen
8 bis 55 Gew.% an Vinylpolymerisat
5 bis 20 Gew.% Tackifier-Harz
1 bis 10 Gew.% Lösungsmittel
20 bis 55 Gew.% Füllstoffe
0,5 bis 5 Gew.% Emulgatoren
0,5 bis 5 Gew.% Stabilisatoren;
der Rest ist jeweils Wasser.

Die Herstellung erfolgt im allgemeinen folgendermaßen:
1. Vorlegen einer Polymerdispersion,
2. Zugabe von Emulgatoren und sonstigen Additiven,
3. Zugabe der Füllstoffe,
4. Zugabe der Harzlösung aus Tackifierharz und Lösungsmittel,
5. Einstellung der Viskosität mit Wasser.

Die erfindungsgemäßen Dispersionsklebstoffe eignen sich besonders zum Verkleben von Bodenbelägen. Darunter sind Materialien aus Holz, Textilien oder elastischen Materialien wie PVC, Cushion-Vinyl, Gummi, Linoleum zu verstehen, die auf den Estrich gelegt werden und der Raumausgestaltung, der Isolierung oder dem Schutz des Fußbodens dienen. Bevorzugt werden sie für textile Bodenbeläge, vor allem Teppiche und Kunststoff-Bodenbeläge wie PVC-Fliesen eingesetzt.

Die erfindungsgemäßen Tackifierharze können für Klebstoffe auf Basis der verschiedensten Polymere verwendet werden, z.B. für Polyacrylate, Styrol-Butadien-Coplymere, Ethylen-vinylacetat-Copolymere und Polyvinylacetat. Die eingesetzte Menge hängt von der Art des Polymeren ab, für Acrylate sind beispielweise 10 bis 40 Gew.% üblich, für Styrol-Butadien-Copolymere liegen die Mengen bei 10 bis 60 Gew.% - jeweils bezogen auf den Klebstoff. Die Klebstoffe können als Schmelzklebstoffe oder aus Lösungsmittel appliziert werden.

### Beispiele

### Ausgangsprodukte:

epoxidiertes Sojaöl, Edenol^{(R)} D 81, Henkel, Epoxid-Gehalt 6,4 Gew.% Sauerstoff
Epoxystearinsäuremethylester, Epoxid-Gehalt 4,8 Gew.% Sauerstoff
Tallharz (Beviros^{(R)} 3, Firma Bergvik Kemi), Säurezahl 168,6 Balsamharz^{(R)} N, Hercules, Säurezahl 173,3

### Beispiel 1:

500 g indonesisches Balsamharz mit einer Säurezahl von 177,3 werden in einem Dreihalskolben mit Rührer, Stickstoffeinleitung und Rückflußkühler mit Wasserabscheider aufgeschmolzen und 3 h auf 230 °C erhitzt. Dabei bilden sich 10 ml eines Kondensats, das größtenteils aus Wasser besteht. Danach werden 50 g epoxidiertes Sojaöl zugegeben und noch eine Stunde bei 200 °C gerührt.
Man erhält ein sprödes Harz mit Säurezahl 125.

### Beispiel 2:

500 g indonesisches Balsamharz mit einer Säurezahl von 177,3 werden wie in Beispiel 1 behandelt und 50 g Epoxystearinsäuremethylester statt epoxidiertem Sojaöl zugegeben.
Man erhält ein sprödes Harz mit einer SZ von 126.

### Beispiel 3:

500 g indonesisches Balsamharz mit einer Säurezahl von 177,3 werden wie in Beispiel 2 behandelt und 75 g Epoxystearinsäuremethylester zugegeben.
Man erhält ein sprödes Harz.

### Beispiel 4:

500 g indonesisches Balsamharz mit einer Säurezahl von 177,3 werden wie in Beispiel 2 behandelt und 125 g Epoxystearinsäuremethylester zugegeben.
Man erhält ein sprödes Harz.

### Beispiel 5 :

In der in Beispiel 1 beschriebenen Apparatur werden 250 g epoxidiertes Sojaöl, 308 g indonesisches Balsamharz (SZ = 177,3) und 0,6 g LiOH unter Rühren 3 h auf 150-160 °C erwärmt, dabei werden 4 ml eines wäßrigen Kondensats abgeschieden. Danach wird für eine Stunde auf 200 °C erwärmt. Nach Abkühlen auf 120 °C werden 98 g Maleinsäureanhydrid zugegeben und noch 1 h bei dieser Temperatur nachgerührt. Man erhält ein sprödes Harz mit SZ = 74,2.

### Beispiel 6:

In der in Beispiel 1 beschriebenen Apparatur werden 374 g Epoxystearinsäuremethylester, 317 g indonesisches Balsamharz (SZ = 177,3) und 0,7 g LiOH unter Rühren 3 h auf 150 -160 °C erwärmt, dabei werden 7 ml eines wäßrigen Kondensats abgeschieden. Danach wird für eine Stunde auf 200 °C erwärmt. Nach Abkühlen auf 120 °C werden 98 g Maleinsäureanhydrid zugegeben und noch 1 h bei dieser Temperatur nachgerührt. Man erhält ein viskoses Harz.

### Beispiel 7:

### Ansatz:

| | |
|---|---|
| 100 g | Edenol^{(R)} D 81 = 0,4125 mol Epoxid |
| 106,8 g | Balsamharz^{(R)} N = 0,33 mol COOH |
| 0,2 g | LiOH |

In einem 1-l-Dreihalskolben mit Rührer, Wassserabscheider und Stickstoff-Einleitung werden die Produkte 6 h lang auf 150°C erhitzt, bis die Säurezahl auf 8 abgesunken ist.
Man erhält ein sprödes Harz.

Modifikation von Tallharz zur Verminderung des Geruchs

### Beispiel 8:

500 g Tallharz mit einer Säurezahl von 168,3 (Beviros 3^{(R)}) werden wie in Beispiel 1 beschrieben 6 h bei 230 °C behandelt. Es bildet sich kein Kondensat. Danach werden 50 g Epoxystearinsäuremethylester zugegeben und noch 2 Stunden bei 200 °C nachgerührt.

### Beispiel 9:

Analog Beispiel 8 werden 500 g Tallharz (Beviros 3^{(R)}) mit 75 g Epoxystearinsäuremethylester modifiziert.

### Beispiel 10:

Analog Beispiel 8 werden 500 g Tallharz (Beviros NC^{(R)},) mit 75 g Epoxystearinsäuremethylester modifiziert.

Modifikation mit Epoxid und anschließender Veresterung

### Beispiel 11:

510 g indonesisches Balsamharz mit einer Säurezahl von 190,1 und 80 g Xylol werden in einem Dreihalskolben mit Rührer, Stickstoffeinleitung und Rückflußkühler mit Wasserabscheider aufgeschmolzen und 5 h auf 200 °C erhitzt. Dabei bilden sich 7 ml eines Kondensats, das größtenteils aus Wasser besteht. Danach werden 75 g Epoxistearinsäuremethylester mit 4,8 Gew.% Epoxidgehalt zugegeben und über einen Zeitraum von 5 Stunden bei Temperaturen von 220 - 230 °C gerührt. Dabei werden weitere 3 ml eines wäßrigen Kondensats abgeschieden. Das Xylol wird im Vakuum abgezogen.
Man erhält ein sprödes Harz mit einer Säurezahl von 126,3.

### Beispiel 12:

Analog Beispiel 11 werden 510 g indonesisches Balsamharz mit einer Säurezahl von 190,1, 80 g Xylol und 125 g Epoxistearinsäuremethylester umgesetzt.
Man erhält ein kalten Fluß aufweisendes Harz mit einer Säurezahl von 99,7.

### Beispiel 13:

Analog Beispiel 11 werden 510 g indonesisches Balsamharz mit einer Säurezahl von 190,1, 80 g Xylol und 75 g epoxidiertes Leinöl mit einem Epoxidgehalt von 9,2 Gew.% umgesetzt. Man erhält ein sprödes Harz mit einer Säurezahl von 110,6.

### Beispiel 14:

Analog Beispiel 11 werden 510 g indonesisches Balsamharz mit einer Säurezahl von 190,1, 80 g Xylol und 55 g epoxidiertes 1-Dodecen ( = 0,31 mol Epoxid) umgesetzt.
Man erhält ein sprödes Harz.

### Beispiel 15:

Analog Beispiel 11 werden 510 g indonesisches Balsamharz mit einer Säurezahl von 190,1, 80 g Xylol und 45 g Phenylglycidylether ( = 0,30 mol Epoxid) umgesetzt. Man erhält ein sprödes Harz.

### Beispiel 16:

Analog Beispiel 11 werden 510 g Tallharz Beviros^{(R)} 3 mit einer Säurezahl von 168,6, 80 g Xylol und 100 g Epoxystearinsäuremethylester umgesetzt.
Man erhält ein kalten Fluß aufweisendes Harz mit einer Säurezahl von 95,2.

### Aceton-Test:

Der Acetontest mißt die Kristallisationstendenz der Harze.

Für den Test werden 7 Gewichtsteile Harz mit 3 Gewichtsteilen Aceton in einem Reagenzglas geschüttelt, bei Raumtemperatur ( etwa 20 °C) aufbewahrt und die Zeit bis zur Kristallbildung gemessen.

**Tabelle 1:**

| Kristallisationsneigung | |
|---|---|
| Harz | Zeit bis zur Kristallisation |
| Balsamharz | 15 min |
| Tallharz | 1 min |
| Bsp 1 | 2 Wochen |
| Bsp 2 | 2 Wochen |
| Bsp 3 | 2 Wochen |
| Bsp 4 | >2 Wochen |
| Bsp 5 | >2 Wochen |
| Bsp 6 | >2 Wochen |
| Bsp 7 | 1 Woche |
| Bsp 8 | 1 Tag |
| Bsp 9 | >2 Wochen |
| Bsp 10 | >2 Wochen |
| Bsp 11 | >2 Wochen |
| Bsp 12 | >2 Wochen |
| Bsp 13 | >2 Wochen |
| Bsp 14 | >2 Wochen |
| Bsp 15 | >2 Wochen |
| Bsp 16 | 1 Woche |

**Tabelle 2:**

| Geruchliche Prüfung von Tallharz-Derivaten | |
|---|---|
| | Geruch |
| Tallharz Beviros^{(R)} 3 | stechend, harzartig |
| Tallharz Beviros^{(R)} NC | stechend, harzartig |
| Beispiel 8 | mäßig, harzartig |
| Beispiel 9 | mäßig, nach Fett |
| Beispiel 10 | mäßig, nach Fett |

### Klebstoff-Rezeptur:

Aus 120 g eines Harzes oder eines nach Beispiel 11 modifizierten Harzes und 30 g einer Mischung aus 80 T Isoparaffin (Isopar^{(R)} L, Exxon) und 20 T Butyldiglykolacetat wird eine Harzlösung mit 80 Gew.% Festkörper hergestellt.

30 g dieser Lösung werden auf 70 °C erwärmt und in 350 g Acronal^{(R)} A 323, BASF, einer für Dispersions-Klebstoffe üblichen Polymerdispersion, mit Hilfe eines Dissolvers eingerührt.

Nach Zugabe von 0,5 Gew.% Latecol^{(R)}, BASF, eines Verdikkungsmittels auf Basis eines sauren Polyacrylats, werden 50 g Butyldiglykolacetat zugegeben und der Klebstoff mit 450 g eines üblichen calcitischen Füllstoffs gefüllt und die Viskosität mit Wasser eingestellt.
Der fertige Klebstoff eignet sich zur Verklebung von PVC- und Cushion-Vinyl-Belägen.

Nach der angegebenen Rahmenrezeptur werden drei Klebstoffe hergestellt und auf eine Viskosität von 18.000 mPa·s, gemessen mit dem Brookfield-Viskosimeter bei 20 °C eingestellt:
a) mit nicht modifiziertem Harz (indones. Balsamharz) und Toluol als alleinigem Lösungsmittel
b) mit nicht modifiziertem Harz (indones. Balsamharz) und Gemisch aus Isopar ^{(R)}L und Butyldiglykolacetat
c) mit modifiziertem Harz nach Beispiel 11 und Gemisch aus Isopar ^{(R)}L und Butyldiglykolacetat

Die drei Klebstoffe wurden anwendungstechnisch geprüft, die Ergebnisse sind in Tabelle 3 festgehalten.

**Tabelle 3:**

| Klebstoffprüfung | | | | | |
|---|---|---|---|---|---|
| Klebstoff | Fadenzug nach [min] | Anfangs- | End- | Geruch | Zustand nach 6 Monaten |
| | | Festigkeit | | | |
| a | 10-15 | i.O. | i.O. | stechend nach Toluol | stabil |
| b | 10-15 | i.O. | i.O. | milde | hochviskos, nicht verarbeitbar |
| c | 10-15 | i.O. | i.O. | milde | stabil |

Der Fadenzug ist ein Maß für das Einsetzen der für die sofortige Klebung notwendigen Klebkraft, des sogenannten "Tacks".

i.O. bedeutet, daß die Anforderungen erfüllt werden.

Die Prüfung zeigt deutlich, daß nur mit den modifizierten, in ihrer Kristallisationsneigung verringerten Harzen, die Anforderungen nach einem milden angenehmen Geruch und hoher Lagerstabilität des Klebstoffs erfüllt werden können.

## Patentansprüche

1. Harze mit verringerter Kristallisationstendenz, erhältlich indem man
a) epoxidierte Ester von ungesättigten Fettsäuren mit aliphatischen Alkoholen mit Harzsäuren bei erhöhten Temperaturen reagieren läßt,
b) gewünschtenfalls vor oder nach dieser Reaktion die Harzsäuren einer thermi- schen Behandlung unterzieht,
c) gewünschtenfalls im Anschluß an die Epoxid-Addition mit cyclischen Dicar- bonsäureanhydriden und/oder olefinische Doppelbindungen enthaltenden Di- carbonsäuren reagieren läßt und
d) gewünschtenfalls im Anschluß an die Epoxid-Addition eine Veresterung überschüssiger Carboxylgruppen mit den durch die Addition von Epoxid- an Carboxylgruppen entstandenen OH-Gruppen durchführt.

2. Harze nach Anspruch 1, dadurch gekennzeichnet, daß die thermische Behandlung über einen Zeitraum von 2 bis 6 Stunden bei Temperaturen von 200 bis 300 °C erfolgt.

3. Harze nach einem der Ansprüche 1 oder 2, dadurch gekennzeichnet, daß das Äquivalentverhältnis von Epoxidgruppen zu Carboxylgruppen bei der Reaktion der Epoxidverbindungen mit den Harzsäuren im Bereich von 1,5:1 bis 0,01:1 liegt.

4. Harze nach einem der Ansprüche 1 bis 3, dadurch gekennzeichnet, daß im Anschluß an die Epoxid-Addition, gegebenenfalls nach Zugabe eines Veresterungskatalysators, eine Veresterungsreaktion überschüssiger Carboxyl-gruppen mit den durch die Addition von Epoxid- an Carboxylgruppen entstandenen OH-Gruppen bei Temperaturen von 150 bis 250° C durchgeführt wird.

5. Harze nach einem der Ansprüche 1 bis 4, dadurch gekennzeichnet, daß das cyclische Dicarbonsäureanhydrid Maleinsäureanhydrid darstellt.

6. Harze nach einem der Ansprüche 1 bis 5, dadurch ge-kennzeichnet, daß das cyclische Dicarbonsäureanhydrid in Mengen von 1 bis 40 Gew.% - bezogen auf das Additionsprodukt von Epoxidverbindung und Harzsäure - eingesetzt wird.

7. Verfahren zur Herstellung von Harzen mit verringerter Kristallisationstendenz, bei dem Harzsäuren für 2 bis 6 Stunden auf Temperaturen von 200 bis 300 °C erhitzt werden, anschließend bei Temperaturen von 100 bis 150 °C epoxidierte Ester von ungesättigten Fettsäuren mit aliphatischen Alkoholen zugegeben werden, wobei das Äquivalentverhältnis von Epoxidgruppen zu Carboxylgruppen im Bereich von 0,95:1 bis 0,01:1 liegt, und schließlich für 2 bis 4 Stunden bei Temperaturen von 200 bis 250 °C gegebenenfalls unter weiterer Zugabe eines Veresterungskatalysators überschüssige Carboxylgruppen mit entstandenen Hy-droxylgruppen verestert werden.

8. Verwendung von Harzen nach Anspruch 1 als Tackifierharze in Klebstoffen.

9. Dispersionsklebstoffe auf Basis von Vinylpolymeren, dadurch gekennzeichnet, daß sie Harze gemäß Anspruch 1 als Tackifierharz enthalten, wobei das Gewichts- verhältnis von Vinylpolymerem:Harz im Klebstoff im allgemeinen zwischen 20:1 bis 0,3:1 liegt.

10. Harze nach einem der Ansprüche 1 oder 2, dadurch gekennzeichnet, daß das Äquivalentverhältnis von Epoxidgruppen zun Carboxylgruppen bei der Reaktion der Epoxidverbindungen mit den Harzsäuren im Bereich von 0,95:1 bis 0,05:1 liegt.

## Claims

1. Resins with a reduced tendency to crystallize obtainable by
a) reacting epoxidized esters of unsaturated fatty acids with aliphatic alcohols with resin acids at elevated temperatures,
b) optionally subjecting the resin acids to a heat treatment before or after this reaction,
c) optionally conducting a further reaction with cyclic dicarboxylic anhydrides and/or with dicarboxylic acids containing olefinic double bonds after the epoxy addition,
d) optionally esterifying excess carboxyl groups with the OH groups formed by the addition of epoxy groups to carboxyl groups after the epoxy addition.

2. Resins as claimed in claim 1, characterized in that the heat treatment is carried out for 2 to 6 hours at temperatures of 200 to 300°C.

3. Resins as daimed in claim 1 or 2, characterized in that the equivalent ratio of epoxy groups to carboxyl groups in the reaction of the epoxy compounds with the resin acids is in the range from 1.5:1 to 0.01:1.

4. Resins as claimed in any of claims 1 to 3, characterized in that, after the epoxy addition and optionally after addition of an esterification catalyst, excess carboxyl groups are esterified with the OH groups formed by the addition of epoxy groups onto carboxyl groups at temperatures of 150 to 250°C.

5. Resins as claimed in any of claims 1 to 4, characterized in that the cyclic dicarboxylic anhydride is maleic anhydride.

6. Resins as claimed in any of claims 1 to 5, characterized in that the cyclic dicarboxylic anhydride is used in quantities of 1 to 40% by weight, based on the adduct of epoxy compound and resin acid.

7. A process for the production of resins with a reduced tendency to crystallize, in which resin acids are heated for 2 to 6 hours to temperatures of 200 to 300°C, epoxidized esters of unsaturated fatty acids with aliphatic alcohols are added at temperatures of 100 to 150°C, the equivalent ratio of epoxy groups to carboxyl groups being in the range from 0.95:1 to 0.01:1, and finally excess carboxyl groups are esterified with the hydroxyl groups formed for 2 to 4 hours at temperatures of 200 to 250°C, optionally in the presence of an esterification catalyst.

8. The use of the resins claimed in claim 1 as tackifier resins in adhesives.

9. Dispersion adhesives based on vinyl polymers, characterized in that they contain the resins claimed in claim 1 as tackifier resins, the ratio by weight of vinyl polymer to resin in the adhesive generally being between 20:1 and 0.3:1.

10. Resins as claimed in claim 1 or 2, characterized in that the equivalent ratio of epoxy groups to carboxyl groups in the reaction of the epoxy compounds with the resin acids is in the range from 0.95:1 to 0.05:1.

## Revendications

1. Résines ayant une tendance diminuée à la cristallisation, que l'on peut obtenir
a) en faisant réagir des esters époxydés d'acides gras insaturés avec des alcools aliphatiques, avec des acides résiniques à des températures élevées,
b) si on le désire, en soumettant avant ou après cette réaction les acides résiniques à un traitement thermique,
c) si on le désire, après l'addition d'époxyde, en faisant réagir avec des anhydrides d'acide dicarboxyliques cycliques et/ou des acides dicarboxyliques contenant des doubles liaisons oléfiniques, et
d) si on le désire, après l'addition d'époxyde, en réalisant une estérification des groupes carboxyle en excès avec les groupes OH apparus par addition d'époxyde sur des groupes carboxyle.

2. Résines selon la revendication 1,
caractérisées en ce qu'
on procède au traitement thermique pendant une durée de 2 à 6 heures à des températures de 200 à 300°C.

3. Résines selon l'une des revendications 1 ou 2
caractérisée en ce que
le rapport d'équivalence des groupes époxyde aux groupes carboxyle dans la réaction des composés d'époxyde avec les acides résiniques se situe dans un intervalle de 0,95:1 à 0,01:1.

4. Résines selon l'une des revendications 1 ou 3,
caractérisée en ce qu'
après l'addition d'époxyde, le cas échéant après l'addition d'un catalyseur d'estérification, on effectue une réaction d'estérification des groupes carboxyle en excès avec les groupes OH apparus à la suite de l'addition d'époxydes à des groupes carboxyle, à des températures de 150 à 250°C.

5. Résines selon l'une des revendications 1 à 4,
caractérisée en ce que
l'anhydride d'acide dicarboxylique cyclique représente l'anhydride maléique.

6. Résine selon l'une des revendications 1 à 5,
caractérisée en ce que
l'anhydride maléique d'acide dicarboxylique cyclique est utilisé en des quantité de 1 à 40 % en poids - par rapport au produit d'addition du composé époxyde et d'acide résinique.

7. Procédé de fabrication de résines à tendance diminuée à la cristallisation, dans lequel on chauffe les acides résiniques pendant 2 à 6 heures à des températures de 200 à 300°C, puis on ajoute à des températures de 100 à 150°C les esters époxydés d'acides gras insaturés avec des alcools aliphatiques, le rapport d'équivalence des groupes époxyde aux groupes carboxyle se situant dans un intervalle de 0,95:1 à 0,01:1, et enfin où l'on estérifie pendant 2 à 4 heures, à des températures de 200 à 250°C, le cas échéant en ajoutant encore un catalyseur d'estérification, les groupes carboxyle en excès avec les groupes hydroxyle apparus.

8. Utilisation de résines selon la revendication 1, comme résines collantes dans des adhésifs.

9. Adhésifs de dispersion à base de polymères de vinyle,
caractérisés en ce qu'
ils contiennent des résines selon la revendication 1, comme résine collante, le rapport pondéral polymère de vinyle:résine dans l'adhésif se situant généralement entre 20:1 et 0,3:1.

10. Résines selon l'une des revendications 1 ou 2,
caractérisées en ce que
le rapport d'équivalence des groupes époxyde aux groupes carboxyle dans la réaction des composés d'époxyde avec les acides résiniques se situe dans un intervalle de 0,95:1 à 0,05:1
